# EUROPEAN PATENT APPLICATION

(11) **EP 3 517 376 A1**
(43) Date of publication of application: **31.07.2019**
(21) Application number: 19386005.3
(22) Date of filing: 23.01.2019
(51) Int. Cl.: B60T 1/14

(54) **SPECIAL VEHICLE BRAKING SYSTEM USING ROAD NAILS**

(30) Priority: 24.01.2018 GR 20180100027
(71) Applicant: Panasolar E.E., 26 223 Patras (GR)
(72) Inventor: ZIKOS, Dimitros, 26 223 Patras (GR)

(57) **Abstract**

The Special Vehicle Braking System Using Road Nails is intended to enhance the braking of vehicle (1) by operating in parallel with the vehicle brakes. It is only controlled by the vehicle computer in an emergency, where the computer anticipates a collision by vehicle (1), slipping, etc.: a suitable device (5) guides one edge of belt (3) onto road (2), rivets it with nails (4) along the entire length of belt (3) and retain the free edge of the belt with brake system (12) so as to exert a deceleration force on the vehicle. The nails are ejected by nailing mechanism (6) and configuration (9) optimises the angle of nailing mechanism (6) with respect to belt (3), in accordance with the speed of vehicle (1). At the end of the special braking, a belt cutting system (10) cuts the belt (3) and liberates the vehicle (1).

## Description

The Special Vehicle Braking System Using Road Nails operates with a vehicular mechanism that affixes one end of a belt (that it retains with its free edge) with nails onto the road surface, in order to exert a deceleration force upon the vehicle. The system is activated in an emergency where the vehicular computer assesses that the vehicle will collide with a serious obstacle or will slip, despite the application of brakes onto the wheels.

The usual method of braking a vehicle until now applied deceleration to the vehicle's rotating wheels as they rotated on the road. This deceleration was however restricted by the relatively small magnitude of the frictional force that was applied by the tyres onto the road surface. Several systems have appeared, primarily at the patent level, which aspire to act in addition to the brakes, some of which affix nails onto the road. We indicatively refer to the system that is presented in Patent DE19804076A1, which ejects nails that secure the end of a rope onto the ground and a suitable system brakes the unfolding of the remaining rope thus decelerating the vehicle. This system has the following disadvantages: a) it uses a rope that is specifically configured at one end to accept a nail in each configuration and requires the corresponding ejection mechanism for each nail; b) it doesn't employ rope guidance, which doesn't ensure that other nails can be nailed onto the rope after the first nail; c) it utilises the winding of the rope onto a drum, which prohibits the system's use on high speed vehicles: the entire coil of rope, which will have a length of dozens of metres with significant weight and inertia, must unwind at a peripheral speed that is equal to the current vehicle speed when the first nail is nailed onto the road, where its only accelerating force is the force that is provided by the first nail. This force will detach the first nail at high vehicle speeds, which significantly restricts the range of speeds where this system can operate.

Another system is described in Patent DE3437402A1 where a braking device is ejected from the vehicle onto the road, which is affixed to the vehicle with a rope and the device has explosive mechanisms for riveting the nails onto the road. The system's disadvantages are that the system will be secured to the road and will have a mass that renders it dangerous to passing vehicles. The end of the rope will also be continuously connected to the vehicle that will make it hazardous to passing vehicles if it is cut.

The Special Vehicle Braking System Using Road Nails has: a central computer that uses cameras and sensors, analyses the image by examining potential impact, as well as the road quality, one or more belts (3) with a flattened cross section, one or more movable (5) belt guidance devices, each of which guides the corresponding belt (3) on the road (2), one or more nail (4) acceleration nailing systems (6), where every nail (4) is guided to nail the belt (3) onto its flattened side (3P) and nail it onto the road (2), where each of the nailing systems (6) has a special mechanism (9) for varying the angle (φ°) with respect to the road surface (2) in proportion to the current speed of the vehicle (1), by using sliders(11), whereby every nailing system (6) that is controlled by the special mechanism (9) can direct the nails (4) at the same point on the belt position (3P) with respect to the corresponding moving device (5), where the nails (4) are predominantly nailed on one end and also along the entire length of the belt (3) that will remain on the road (2), one or more braking devices (12) that can exert a braking force on the free end of every belt (3) at every moment, which is proportional to the number of nails already nailed onto its nailed edge, using mechanisms (12a), one or more systems for cutting (10) the corresponding belt (3), which can be activated using mechanisms (10a), and a telecommunication system with the capacity of transmitting a GPS signal and informing the control centre for the activation of the system, where the above system can rotate around a vertical axis (14) and where the central computer will activate the above when it has assessed that there will be a collision with serious obstacles or where the vehicle for example slips while travelling on ice, etc.

The advantages of the proposed system with respect to the existing systems are:
a) a belt (3) is used with a flattened cross section and the very body of belt (3) is used for nailing onto the ground so as to provide the capacity for the multiple insertion of nails (4) at different positions on the belt (3) and not a special device with explosive devices that remains on the road or special configurations at the rope ends; b) every belt (3) that will remain on the road (2) after the special braking has finished, will be fixed to the road (2) with nails (4) that are not only nailed at one end, but at many points along its entire length, so that one of its ends doesn't freely flutter on the road and to ensure the safety of passing vehicles; c) the belt is not rolled in a coil but is stacked (3a), (3c): during the nailing of the first nail (4) on the edge of the belt (3), only a small portion of belt (3) needs to be accelerated, which can be safely done, even when the vehicle (1) is travelling at very high speeds; d) when the vehicular computer decides to suspend the connection between the vehicle and the belts (3), the cutting devices (10) then immediately cut the belts (3) so that the vehicles is disconnected from its link to the road (2) and is able to continue its journey; e) the system can rotate around a vertical axis (14), so that is also able to function in cases of restricted angular deviation or rotational movement by the vehicle from its path of movement in a straight-line, e.g. during slipping.

The attached Figures depict the special braking system in vehicle (1) using nails (4) on the road (2) with one belt (3), an ejection system (6) for nails (4), a braking system (12) and a belt cutting system (10):
Fig. (1) depicts the activated braking system, where belt (3) has already been nailed to the road (2) braking vehicle (1);
Fig. 2 depicts the equipment in the special braking system;
Fig. 3 depicts the vertical axis 14 around which the special braking system can rotate, as well as the targeting position (3P) of the nailing mechanism (6);
Fig. 4 depicts the folded belt (3);
Fig. 5 depicts the folding configuration of the belt (3) inside the case (13);
Fig. 6 depicts one of the potential configurations of the nail (4);
Fig. 7 depicts the configuration of the magazine (7) for the nails (4);
Fig. 8 depicts the angle of incidence (φ°) of a nail (4) in position (3P) on belt (3);
Fig. 9 depicts the operation of mechanism (9) with the sliders (11) and the rollers (11a);
Fig. 10 depicts the braking device (12) of the belt;
Fig. 11 depicts the device (10) for cutting the belt;
Fig. 12 depicts the position of the moving device (5) for guiding the belt (3) into the system's idle position.

The system may be implemented in many ways. It is only activated by the vehicular computer. The computer controlling the system accepts and evaluates data from the following sensors:
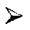 Driving cameras to visually assess an imminent collision by the vehicle with an obstacle in front and to assess the road quality;
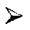 Distance sensor from potential obstacles;
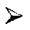 Distance sensor from the vehicle that may be following;
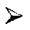 Vehicle speed sensor;
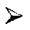 Cameras in the passenger cabin;
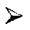 Sensors for passenger seatbelt use;
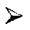 Road slipping sensor (moisture, ice, snow);
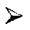 Linear Acceleration Sensor;
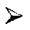 Angular Acceleration Sensor;
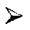 Belt unfolding sensor;
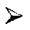 Vehicle and passenger weight sensors;
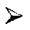 Vehicle overturning sensor, etc.

The vehicular computer utilises the data from the cameras and the above sensors, constantly conducts environmental recognition and is able to recognise the obstacle in the vehicle's path: vehicle, pedestrian, tree trunk, etc. or slipping by the vehicle. It will then evaluate a potential collision by using data on the vehicle's linear and angular speed and acceleration, slippery conditions (moisture, ice and snow) on the road, the trajectory of the collision course (on a straight or a bend in the road), the capacity for avoiding the obstacle with appropriate manoeuvres, the quality of the asphalt on the road surface, etc. It will also assess potential impact on the vehicle's perimeter, e.g. with the vehicle behind that may not be able to follow the vehicle's assisted deceleration using the special braking system. It will also utilise data from the passenger cabin cameras by examining the presence of say children and their distance from vehicle parts such as dashboard and seats, through the passenger weight sensors and their seatbelt usage.

The vehicular computer will evaluate the above information and decide upon the need to use the system and the optimum maximum brake force that it will implement, namely how many nails it will nail. It will be activated when the brakes are activated by the driver or it can be programmed to be activated even where the brakes are activated by the driver. The special braking shall function independently and in addition to the wheel braking system.

For reasons of simplicity, we will describe the system's implementation in detail below in a passenger vehicle with one belt, one explosive nail firing system, one belt braking system and one belt detachment (cutting) system.

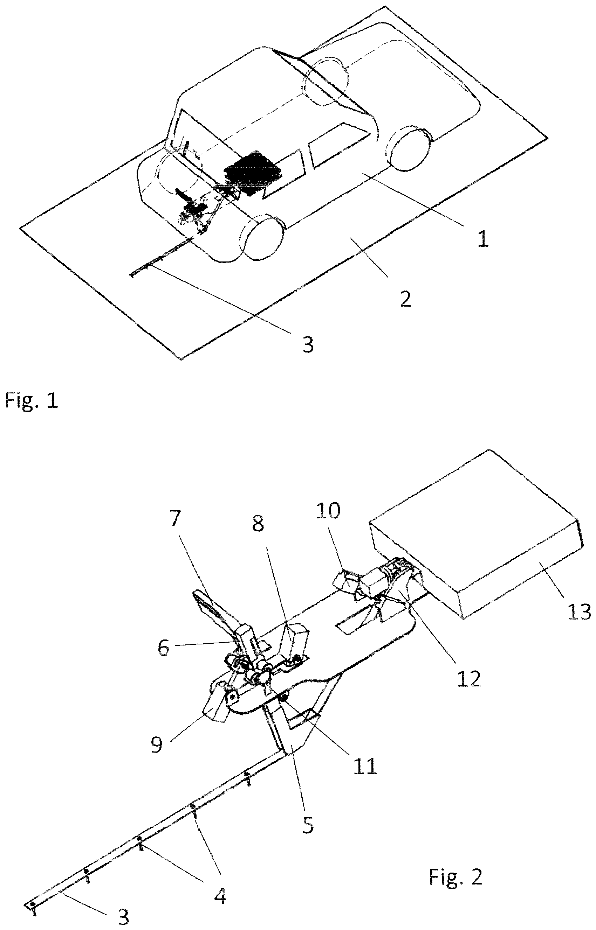

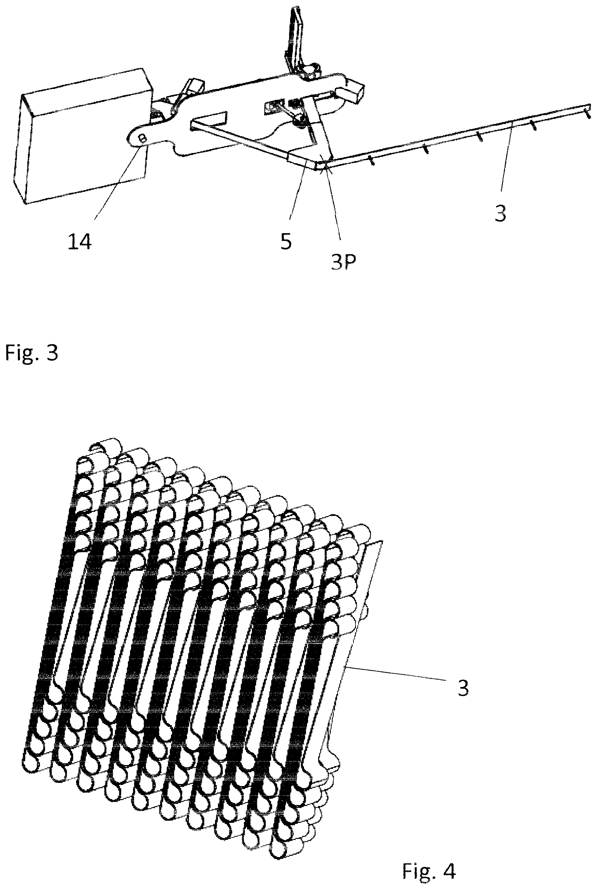

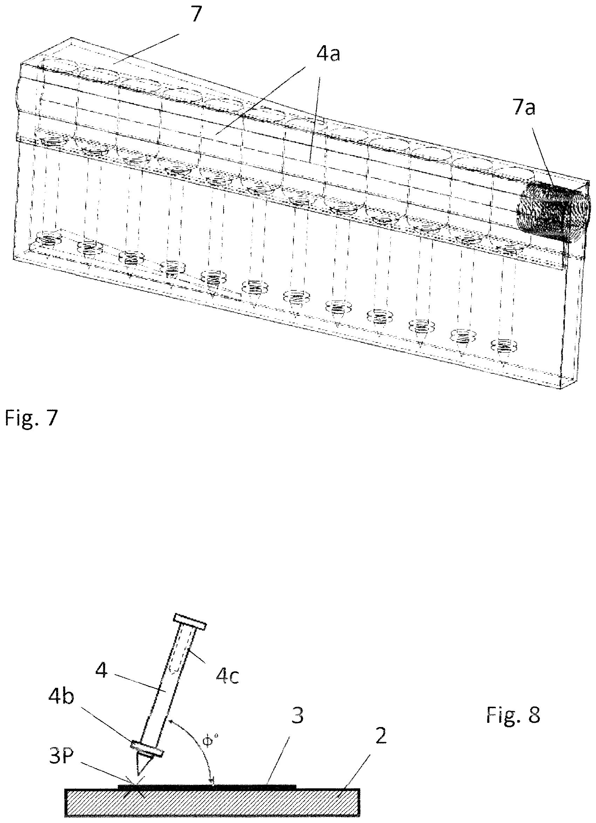

The operating stages of the special braking vehicle system using road nails are:
A. When the vehicular computer decides to activate the special braking, the activation mechanism (8) then moves guide (5) of the belt (3) by rotating it from the idle position (12) into the operating position in Fig. 2. Guide (5) is equipped with a belt (3) receiving configuration [Fig. 2 and 3], which moves and presses the edge of belt (3) during its movement onto the road (2).
B. The nailing system (6) is then supplied with nails (4) from the magazine (7) in Fig. 2, which will eject the first nail (4) that shall penetrate the belt (3) and be nailed onto the road (2). Guide (5) also controls the precise position of the belt (3) so that every nail (4) will penetrate belt (3) in the middle of its flattened side. The points in guide (5) that come into contact with belt (3) and the road (2) are covered by an anti-friction material. Fig. 8 depicts the configuration of a nail (4) that may be comprised of: a) a powder cartridge (4a) which, upon being triggered inside the ejection system of nailing system (6) that can be a type of machine gun, will provide it with the speed required to operate what we have described; b) the main body of nail (4) that shall be nailed into belt (3) and the ground (2); and c) the washer (4b) that is tightly fitted onto it, which shall guide nail (4) as it moves inside the ejection system of nailing system (6). Every nail (4) may have an internal threading (4c), so an extractor may be used when it needs to be removed from the road (2).

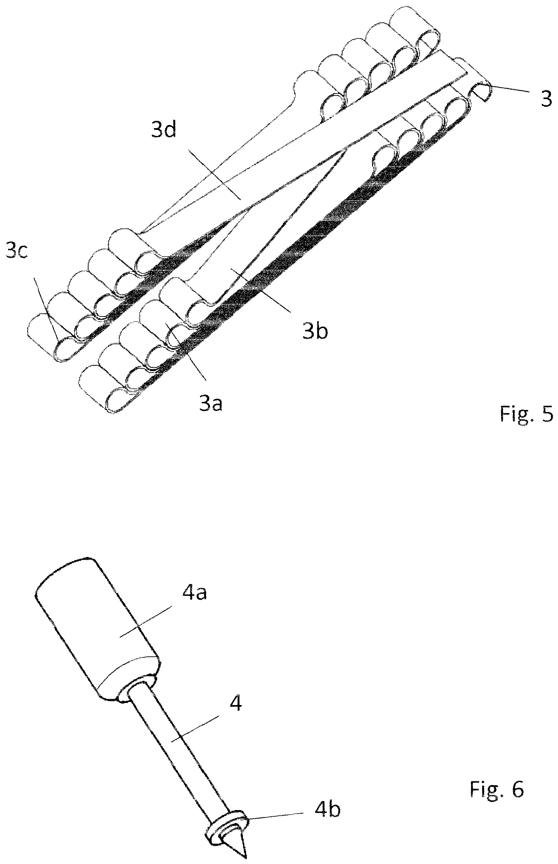

The procedure for launching nail (4) shall be repeated many times in the shortest possible period of time. Belt (3) will be folded in case (13) to minimise the volume that it will occupy in vehicle (1) [depicted in Fig. 2 and 4] and to minimise resistance during its unwinding process for nailing it onto the road (2). One method for folding belt (3) is depicted in Fig. 5, which portrays examples of implementing the folding of belt (3) in 2 rows of stacks and is as follows: belt (3) may be folded into stacks (3a) and (3c), each of which is comprised of parallel layers of belt (3), e.g. 10 layers of the belt, where each layer is smaller than the previous layer in length, so that the straight line segment of each layer touches the straight line segment of the next and the previous layer in the stack, whereby after the first stack (3a) has been formed, belt (3) continues (3b) to be folded beside stack (3a), thus forming a new stack (3c) beside the previous stack (3a) and is then folded to a beside stack (3d), thus forming a new stack above the first stack (3a), which then forms the next stack on top of stack (3c), etc., thus minimising the final volume of belt (3) in Fig. 4 and the case (13).

The feed of nails (4) into each nail ejection mechanism (6) occurs through a special magazine (7) that has a nail (4) propulsion mechanism, such as the spring (7a) in Fig. 7.

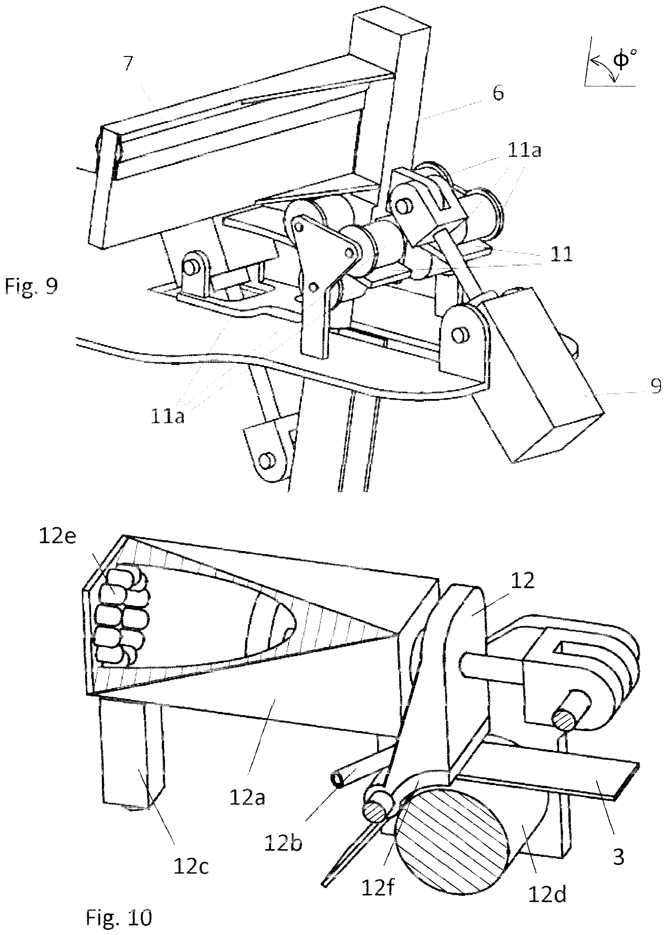

Every nailing system (6) has an angle (φ°) with respect to the road, which is adjusted with the assistance of mechanism (9) by using sliders (11) that are controlled by rollers (11a) in Fig. 9: the greater the vehicle (1) speed implies the smaller angle by the nail to road (2), and accordingly angle (φ°) of the nailing system (6), should be. The reason is that the higher horizontal speed by the belt (3) in relation to the vehicle (1) and nail (4) implies a higher shear force at the point of contact between the belt and the nail, which can reverse the penetration by nail (4) into belt (3). The attribution of the suitable angle (φ°) to nail (4) at the time that it prepares to penetrate belt (3), balances this shear force from the component shear forces in nail (4) towards the horizontal axis, which allows its nailing into belt (3). During the path by vehicle (1), the system (9) can continuously vary the angle (φ°) of the nailing system (6), so when the computer activates the nailing system (6) it is already positioned at the correct operating angle.
C. The system has a braking mechanism (12) that is depicted in Fig. 10, which brakes belt (3) and is activated when the first nail (4) is nailed into the ground 2. In this manner, vehicle (1) via belt (3) exerts a pulling force onto the nails (4) that are nailed and immobilised on the ground and accordingly onto the road (2), which decelerates the vehicle (1). The edge of belt (3) will be stabilised onto the road (2) upon the nailing of the first nail (4) and the edge of belt (3) will begin to immediately unwind from its case (13) at the speed that vehicle (1) will have with respect to the road (2) at that time. Every nail (4) can transfer force onto belt (3) to a certain extent, above which the nail (4) will deform the road (2) and become detached from it. A camera will monitor road (2) and the computer will assess its quality via image resolution and decide upon the maximum force per nail that the road (2) can safely provide to belt (3), even when this force is X. The braking mechanism (12) uses brake pads (12f) to brake belt (3) so that the pulling force that the belt exerts onto the riveted nails (4) at every given moment does not exceed the product of force X multiplied by the number of the nails (4) already riveted into the ground 2: with a small force, the vehicle (1) will receive a small deceleration force than the maximum that it can attain, whereby a higher force would detach the riveted nails (4). In the case where the first nail (4) or all the nails (4) are detached, e.g. due to the fact that the quality of the road surface (2) is in a worse condition than the condition assessed by the computer, a sensor monitoring the unfolding of the belt will inform the computer that the belt has stop unwinding, the braking mechanism (12a) will stop braking, it will again apply a brake force onto belt (3) that is smaller for each subsequent nail (4) and this will be repeated until road (2) has been riveted with the first nail (4). The brake force that will then be exerted by brake (12) onto belt (3) shall be equal to the product of this smaller force multiplied by the current number of nails riveted onto road (2) at every given moment.

One form of implementing the braking mechanism is depicted in Fig. 10: control mechanism (12a) presses device (12) onto belt (3) towards the stationary drum (12d). A control mechanism (12a) may be implemented with the use of hydraulic micro valves that are also used in the control mechanism of the ABS brake system. Another control mechanism (12a) is depicted in a sectional depiction of Fig. 10. This mechanism may contain a number of cartridges (12e) in various sizes: every one of these is triggered separately thereby increasing the force of its pressure on piston (12a), in accordance with the total force that the computer wants to exert on device (12) every time. In the event where the nails are detached from road (2), the termination of the braking by piston (12a) may occur by discharging the cartridges (12e) chamber through discharge valve (12c) and the entry of pressurised oil through the entry (12b), which then activates new cartridges (12e). The system will use dozens of nails (4). In order to economise on space and costs, during the riveting of the first nails, mechanism (12a) may use low power hydraulic micro valves or cartridges (12e), until the computer verifies that road (2) can indeed withstand the force that the computer has calculated for conveying every nail and then use powerful high-power cartridges, e.g. where every powerful cartridge (12e) is activated via piston (12a) after riveting say 10 nails (4).

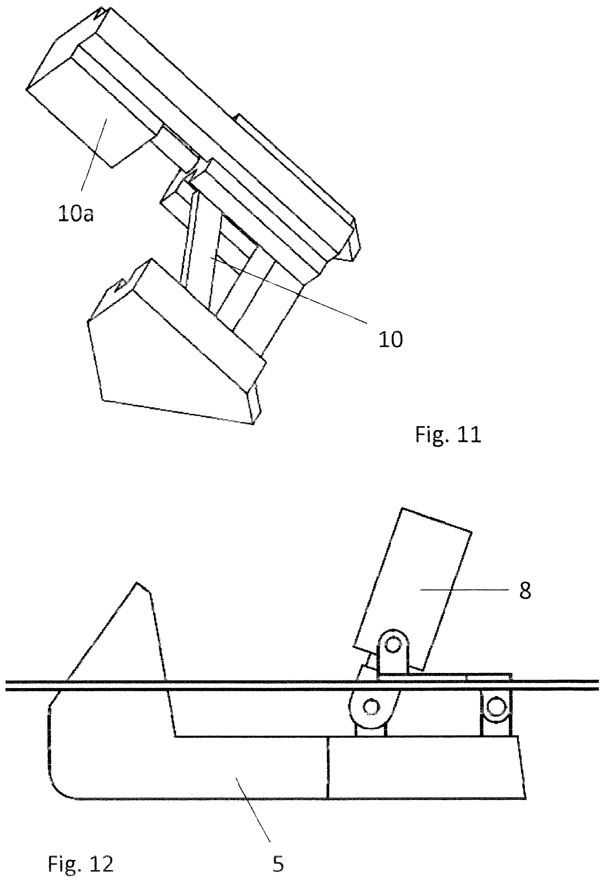

In the case where the vehicular computer (1) for example concludes, after visually assessing road (2), that all the nails (4) will not exhibit the same resistance due to the poor quality of the asphalt, then brake (12) will commence braking belt (3) when the first 10 nails (4) for example have been riveted, by calculating the resistance of every nail (4), as well as the estimated average resistance per nail. The vehicle (1) acceleration sensor will verify the deceleration. The system will be programmed and equipped to rivet the maximum number of nails (4) every time it is activated. The actual number of nails (4) that will be riveted at every braking, shall be determined by the deceleration that every nail (4) can provide to vehicle (1) under the specific road (2) conditions, the vehicle (1) speed, the tolerance by the vehicle (1) and passengers to the overall deceleration, which is the brake deceleration reinforced by the special braking application, etc. After riveting the number of nails (4) that the computer decided to rivet at the beginning of belt (3), which will also exert the deceleration force on vehicle (1) until the system's activation ceases, the system will continue riveting a nail (4) for example every 5 metres on belt (3), until the second edge of belt (3) touches the ground, not for providing additional resistance to belt (3), but for securing belt (3) to road (2). The nailing system (6) will rivet a final nail (4) onto the free edge of belt (3) simultaneously with the activation of the belt cutting system (10). In this way, belt (3) will remain secured to road (2) along its entire length and does not constitute a hazard for passing vehicles because it will have a small size and remain nailed and immobile. D. When the vehicular computer (1) decides to suspend the deceleration provided by the nailed belt (3), regardless of whether vehicle (1) has stopped, the belt cutting system (10) in Fig. 11 will cut belt (3). The electronically controlled belt cutting system (10) will be activated by mechanism (10a), which can be a piston that is similar to piston (12a) in the belt braking that is system depicted in Fig. 10, so that it can reliably operate in the least possible period of time.

The use of belt cutting system (10) liberates vehicle (1) from its connection to road (2) via belt (3) and the activation piston (8) will restore guide (5) for belt (3) to the idle position depicted in Fig. 12.
E. The vehicular computer will be able to send a notification for its activation to the control system monitoring the respective systems at the control centre, as well as the GPS position regarding the point on the road where belt (3) is nailed, so as to dispatch a crew to remove the nailed belt (3) and seal the nail (4) holes on road (2). There can simultaneously be an e-charging of a penalty to the owner of vehicle (1) for damages to road (2), which penalty can for example result in the local municipal funds.

Vehicle (1) that commences the activation of the special braking system notifies the central system monitoring the respective systems at the control centre, which notifies the vehicle following it on the road to also activate its own special braking system, so that the rear vehicle will not collide with the vehicle in front. The vehicular computer (1) may correspondingly receive a notification from the central control system that the vehicle in front will activate the special braking, so that it can apply its brakes in time.

The system will also have a vehicle weight sensor: in an empty truck, the system can use a smaller number of nails (4) than in a full truck, because the passengers in the empty truck may be injured by the fast deceleration.

The system will be effective on a dry road, and it will be even more effective against slipping on a wet road or a road covered by a film of ice.

The bulky case (13) for belt (3) can for example be installed below the rear seat, or in the luggage compartment, in the case of a passenger vehicle (1).

The nailing system has the capacity of limited rotation around the vertical rotation axis (14), Fig. 3, in the cases of limited angular deviation or rotary motion by the vehicle with respect to its straight line movement trajectory, e.g.in the case of braking on a road bend, during slipping, etc.

In large vehicles, the system can even be installed after manufacture as an additional safety system.

Activation mechanisms (8), (9), (10a) and (12a) can use all manner of devices with individual hydraulic micro valves, pistons, like oil pistons that can have cartridges (12e) with explosive materials, Fig. 10, electromagnetic mechanisms, servomotors, combinations of the above, etc., which not only perform the required actions with speed, power and flexibility, but also inform the computer to execute its relevant command with their exact position. The special braking system may be implemented in private or commercial vehicles of all type and sizes, such as passenger vehicles, busses, trucks, etc., and even in airplanes for braking on runways with ice. The ejection mechanism (6) may have a mechanical or electrical activation mechanism. When the vehicle overturning sensor detects any overturning by vehicle (1), the computer then stops operating the system.

The vehicular computer will also be in a position to always recognise whether a sensor or mechanism in the system exhibits a fault or the system is generally malfunctioning and to immediately place the system out of service.

## Claims

1. The Special Vehicle Braking System Using Road Nails, which is defined by the fact that the vehicle has a central computer that uses driving and passenger cabin cameras and vehicle weight and passenger weight sensors, sensors for determining the use of passenger seatbelts, distance, slipping, linear and angular speed and vehicle acceleration, and monitoring the unwinding of belt (3), overturning by vehicle (1), etc., which analyse the image by assessing the potential collision on the vehicle perimeter, the road surface quality, etc.; one or more belts (3) with a flattened cross section that are folded in stacks (3a) and (3c) inside special case (13); one or more mobile devices (5) guiding belt (3) with anti-friction coatings; mechanism (8) moving each mobile drive device (5) on the road (2); one or more nailing systems (6) for accelerating nails (4); a mechanism (9) with sliders (11) and rollers (11a) that varies the angle (φ°) of nailing system (6) with respect to the road (2) in accordance with the current speed by vehicle (1) in order to direct the nails (4) at the same point of belt position (3P) with respect to the corresponding moving device (5) guiding belt (3); nails (4) stored in magazines (7) of the corresponding nailing system (6), where every nail (4) can be accelerated to pierce the corresponding belt (3) on its flattened side and to nail it onto road (2), where nails (4) can be predominantly nailed on one end and also along the entire length of belt (3) onto road (2) until the other end of belt (3) also touches road (2); one or more braking systems (12) that use brake pads (12f) can exert a braking force upon the free edge of the corresponding belt (3) every time, which is proportional to the number of the nails (4) already riveted on the nailed edge of belt (3) and with the maximum force which the computer decides that the road surface can withstand and provide to every riveted nail (4); one or more systems for cutting (10) belt (3), whereby the above systems can rotate about the vertical axis (14); a telecommunication system with the capacity of transmitting a GPS location and informing the control centre about the activation of the special braking system, informing the vehicle to the rear about the corresponding notification from the vehicle in front, for the corresponding notification of the crew to remove the nailed belt (3) and financially charging the driver with a penalty; and when the vehicular computer detects an impending collision or slipping by the vehicle, either after the activation of the brakes or without activating brakes, it activates the above controlled devices for the purpose of decelerating vehicle (1) in the safest possible manner.

2. The Special Vehicle Braking System Using Road Nails, in accordance with Claim 1, where every nail (4) can be connected on its flattened edge to a cartridge (4a) with explosive material, have an internal thread (4c) and be connected on the its other edge with a guiding washer (4b) that is tightly fitted onto it.

3. The Special Vehicle Braking System Using Road Nails, in accordance with Claims 1 and 2, is defined by the fact that belt (3) (in order to minimise its volume) can be folded into stacks (3a), (3c), etc., each of which is comprised of parallel layers of belt (3), where each layer is smaller in length than the preceding layer, so that the straight line segment of each layers touches the straight line segment of the previous and next layer in the stack, whereby belt (3) continues onto (3b) being folded next to stack (3a) forming a new stack (3c), where (3d) folds next to it forms a new stack beside or above the first stack (3a), which forms a new stack beside or above the second stack (3c), etc., thus minimising the volume of case (13) containing belt (3).

4. The Special Vehicle Braking System Using Road Nails, in accordance with Claims 1 to3, is defined by the fact that the belt guidance systems (5), the explosive mechanisms guiding nails (6) with the nail magazines (7) and the mechanisms adjusting angle (9), may be rotated about vertical axis (14) with respect to the vehicle, which rotates around its vertical axis in the cases where vehicle (1) brakes or slips.

5. The Special Vehicle Braking System Using Road Nails, in accordance with Claims 1 to 4, is defined by the fact that the supply for every nail ejection mechanism (6) with nails (4) is provided by a special magazine (7) that has a mechanism for propelling nails (4), such as spring (7a).

6. The Special Vehicle Braking System Using Road Nails, in accordance with Claims 1 to 5, is defined by the fact that the launching of each cartridge (4a) is provided by a mechanical or electrical launching mechanism (6).

7. The Special Vehicle Braking System Using Road Nails, in accordance with Claims 1 to 6, is defined by the fact that the activation mechanisms (8), (9), (10a) and (12a) in the individual devices of the system can use all types of oil pistons with hydraulic micro valve devices, cartridges with explosive material (12e), electromagnetic mechanisms, servomotors, etc., or combinations thereof, which not only perform the required actions with speed, force and flexibility, but also inform the computer about the execution of its relevant command and their precise position.

8. The Special Vehicle Braking System Using Road Nails, in accordance with Claims 1 to 7, is defined by the fact that the mechanism (12a) can use low power hydraulic micro valves or cartridges (12e) during the riveting of the first nails until the computer verifies that the road (2) can withstand the forces that the computer had calculated for every nail (4) and then use powerful hydraulic micro valves or high-power cartridges (12e) after riveting a group of nails (4).
